# EUROPÄISCHE PATENTSCHRIFT

(11) **EP 0 382 891 B1**
(45) Veröffentlichungstag und Bekanntmachung des Hinweises auf die Patenterteilung: **12.05.1993**
(21) Anmeldenummer: 89117763.6
(22) Anmeldetag: 26.09.1989
(51) Int. Cl.: B29C 47/02, B29C 47/28

(54) **Verfahren zur Herstellung eines fadenverstärkten, strang-gepressten Gummikörpers**
Method of manufacturing a fibre-reinforced extruded rubber article
Procédé de fabrication d'un corps extrudé renforcé par des fils

(30) Priorität: 16.02.1989 DE 3904588
(43) Veröffentlichungstag der Anmeldung: 22.08.1990
(73) Patentinhaber: Firma Carl Freudenberg, 69469 Weinheim (DE)
(72) Erfinder: Hempel, Jürgen, Dr., D-6940 Weinheim (DE)

(56) Entgegenhaltungen:
- EP-A- 0 248 947
- DE-A- 2 502 363
- DE-A- 2 613 782
- DE-A- 3 509 404
- DE-A- 3 824 757
- GB-A- 2 160 815
- US-A- 3 138 511
- US-A- 3 375 550
- US-A- 3 405 426
- US-A- 4 129 468

## Beschreibung

Die Erfindung betrifft ein Verfahren zur Herstellung eines Seiles, bei dem Fäden aus in Umfangsrichtung verteilten, einen radialen Abstand von der Rotationsachse aufweisenden Mündungen einer in einer Drehbewegung befindlichen Verdrilleinrichtung kontinuierlich fortschreitend ausgestoßen, miteinander verdrillt und in einem polymeren Werkstoff eingebettet werden.

Ein solches Verfahren ist aus der DE-OS 35 09 404 bekannt. Die Fäden werden bei diesem Verfahren erst nach ihrer gegenseitigen Verdrillung gemeinsam mit dem polymeren Werkstoff ummantelt und es gelangt diesbezüglich eine Kunststoffschmelze zur Anwendung. Der auf eine solche Weise gebildete Kunststoffmantel bildet eine von den miteinander verdrillten Fäden gesonderte Einheit, was es ausschließt, daß der Mantel und die Fäden aufeinander einen nennenswerten Verstärkungseffekt auszuüben vermögen. Die insgesamt erzielte Festigkeit ist hierzu unzureichend. Auch ist der Mantel in thermischer Hinsicht wenig beständig.

Aus der EP-A-0 284 947 ist ein Verfahren zur Herstellung eines fadenverstärkten Schlauches aus Gummi bekannt, bei dem die zur Anwendung gelangenden Verstärkungsfäden innerhalb eines Scherkopfes um einen Formkern gewickelt und gleichzeitig in den die Wandung des Schlauches bildenden Werkstoffkörper eingebettet werden, bevor dieser durch Vulkanisierung verfestigt und der Formkern entfernt wird. Ein Hinweis, daß der Formkern bedarfsweise weggelassen werden könnte, ist aus der Druckschrift nicht entnehmbar.

Aus der US-PS 4,671,761 ist ein Verfahren bekannt, bei dem die Einbettung der Fäden in die Gummimischung durch eine dem eigentlichen Scherkopf nachgeschalteten Düse erfolgt. Die einzelnen Teile der Düse sind einander in einer unverdrehbaren Weise zugeordnet, wodurch sich die Fäden stets parallel zueinander und zur Richtung des Gummikörpers erstrecken. Für bestimmte Anwendungsfälle ist das wenig befriedigend.

Der Erfindung liegt die Aufgabe zugrunde, ein Verfahren zur Herstellung eines Seiles zu zeigen, das es erlaubt, eine verbesserte Festigkeit zu erzielen.

Diese Aufgabe wird erfindungsgemäß bei einem Verfahren der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Verfahren wird als Verdrilleinrichtung der im Bereich seiner Stirnfläche von Mündungen durchdrungene Scherdorn eines Scherkopfes und als polymerer Werkstoff eine vulkanisierbare Gummimischung verwendet, wobei die Fäden vor ihrer gegenseitigen Verdrillung in die Gummimischung eingebettet werden und wobei die Geschwindigkeit der Vorwärtsbewegung der Gummimischung so mit der Drehgeschwindigkeit des Scherdorns abgestimmt wird, daß die Gummimischung während der Einbettung der Fäden zumindest annähernd ihre geringstmögliche Viskosität erreicht.

Die Fäden werden hierdurch auf allen Seiten in einer ausgezeichneten Weise durch die Gummimischung benetzt, was eine ausgezeichnete adhäsive Festlegung in dem letztlich enthaltenen Gummikörper bewirkt. Sie folgen zusätzlich während ihrer Einbettung in die Gummimischung der Drehbewegung des Scherdornes, was eine Verdrillung um eine gemeinsame Achse bedingt und einen schraubenförmig gewendelten Verlauf in dem erhaltenen Gummikörper. Dieser ist dadurch nicht nur in der Längs- sondern zusätzlich in der Umfangsrichtung armiert, was beispielsweise eine Verwendung als oder innerhalb von Seilen oder anderen auf Beugung beanspruchten Formkörpern möglich macht.

Die Fäden können aus irgendeinem der einschlägig verwendeten Materialien bestehen, beispielsweise aus natürlichen, künstlichen oder metallischen Textilfäden. Die Verwendung von Mischformen und Ausführungen aus mehreren Teilfäden ist ebenfalls möglich.

Die eingesetzte Gummimischung wird innerhalb des Scherkopfes durch die Relativverdrehung des Scherdornes in bezug auf das Gehäuse einer Walkbeanspruchung unterworfen, welche eine mit zunehmender Drehgeschwindigkeit des Scherdornes ansteigende Erwärmung der eingesetzten Mischung bedingt. Eine Erwärmung auf Vulkanisationstemperatur ist hierdurch bei Anwendung hoher Drehzahlen problemlos möglich. Die Vulkanisierung und hierdurch bedingte Verfestigung ergibt sich indessen auch bei Erreichen der Vulkanisationstemperatur nicht ohne weiteres spontan, sondern erst im Anschluß an eine vorübergehende, erhebliche Absenkung der Fließviskosität der eingesetzten Mischung im Zuge der einsetzenden, eine Verfestigung bewirkenden Vernetzungsreaktion der eingesetzten Mischung. Die verschiedenen Stadien lassen sich deutlich voneinander unterscheiden, was erfindungsgemäß genutzt wird, um die Fäden möglichst zum Zeitpunkt des Erreichens der niedrigstmöglichen Fließviskosität in die Mischung einzubetten und hierdurch eine optimale Benetzung und Einbindung der Fäden in den Gummikörper zu erhalten und diesem eine optimale Festigkeit zu geben.

Die Verweildauer der Gummimischung in dem Scherkopf wird zweckmäßig so bemessen, daß sich die Gummimischung beim Austreten aus der Formdüse des Scherkopfes zumindest in einem fortgeschrittenen Vulkanisationsstadium befindet. Eine Lageveränderung der eingebetteten Fäden ist dadurch im Anschluß nicht mehr möglich. Die gegebenenfalls erforderliche Fertigvulkanisation kann bedenkenlos in einer Temperkammer erfolgen.

Die Fäden können vor der Einführung in den Scherkopf entgegen der Drehrichtung des Scherdornes in sich verdrillt werden, was sich insbesondere dann als vorteilhaft bewährt hat, wenn die einzelnen Fäden aus mehreren Teilfäden zusammengesetzt sind. Die sich in diesem Falle ergebende Armierung innerhalb des fertigen Gummikörpers ist nach Art eines Kreuzschlagsseils gestaltet, was dem Gummikörper bei beliebigen Zug- und Beugebelastungen eine ausgezeichnete Formbeständigkeit verleiht.

Die Fäden können während der Einführung in den Scherdorn gebremst werden, was beispielsweise mit Hilfe einer Reibeinrichtung erfolgen kann. Sie unterliegen in diesem Falle innerhalb des gebrauchsfertigen Gummikörpers einer inneren Vorspannung, was die Dimensionsbeständigkeit derselben weiter verbessert.

Dem Scherkopf kann durch eine die Stirnfläche des Scherdornes konzentrisch durchdringende Hilfsöffnung ein Vorformling kontinuierlich zugeführt werden, der unter Erzeugung einer adhesiven Bindung in der vorstehend beschriebenen Weise mit weiteren, entsprechend den vorliegenden Darlegungen erzeugten Gummikörpern ummantelt wird. Die Anzahl der in radialer Richtung aufeinander folgenden Schichten ist beliebig und ergibt sich aus dem Verwendungszweck des Gummikörpers.

Bei einem entsprechenden, in aufeinander folgenden Stufen schichtweise erzeugten Gummikörper besteht die Möglichkeit, die Drehrichtung des Scherdorns bei jeder neuen Schicht zu ändern. Die in einem solchen Falle in radialer Richtung aufeinander folgenden Fadenlagen sind in diesem Falle einander kreuzweise zugeordnet, was dem gebrauchsfertigen Gummikörper eine gute Dimensionsbeständigkeit verleiht.

In Fällen, in denen die Windungsrichtung der in den aufeinander folgenden Schichten aufeinander folgenden Fadenlagen gleich ist, hat der fertige Gummikörper dem- gegenüber eine vergleichsweise größere Elastizität, was ihn besonders geeignet macht für Anwendungsfälle, in denen mit einer Schlagbelastung während des bestimmungsgemäßen Gebrauchs zu rechnen ist. Optimale Eigenschaften werden in dieser Hinsicht erhalten, wenn die zur Anwendung gelangende Gummimischung zugleich eine hohe innere Dämpfung aufweist. Sie unterstützt zugleich die Unterdrückung von Schwingungen, die sich in bestimmten Verwendungen durch Sekundäreinflüsse in dem Gummikörper ergeben können.

Im Hinblick auf eine feste Haftung aneinander hat es sich als vorteilhaft bewährt, wenn für die Erzeugung des Vorformlings und der einzelnen Gummischichten artverwandte Gummimischungen verwendet werden, wobei diese während der Einbettung der jeweiligen Fadenlage nur vorvulkanisiert und erst nach der endgültigen Formgebung des Gummikörpers gemeinsam fertigvulkanisiert werden. Diesbezüglich kann beispielsweise eine Temperkammer zur Anwendung gelangen, was die Belegungszeit des eigentlichen Scherdornes reduziert und die Wirtschaftlichkeit des erfindungsgemäßen Verfahrens weiter verbessert. Zusätzlich ergibt sich eine unlösbare Verbindung zwischen den in radialer Richtung aufeinander folgenden Schichten eines solchen Gummikörpers und dementsprechend eine erhebliche mechanische Widerstandsfähigkeit.

Die mit Hilfe des erfindungsgemäßen Verfahrens erhältlichen Gummikörper können gegebenenfalls auch vor ihrer Ausvulkanisation in Gummimischungen eingebettet und zu abweichend gestalteten Formkörpern weiter verarbeitet und mit diesen gemeinsam ausvulkanisiert werden. Der sich ergebende Armierungseffekt ist im Hinblick auf die vorschlagsgemäße Einbindungsart der Verstärkungsfäden erheblich.

Ein besonderer Vorteil der nach dem erfindungsgemäßen Verfahren erhältlichen Formteile besteht darin, daß die darin enthaltenden Verstärkungsfäden durch ihre vollständige Einbettung in die Gummimischung in ausgezeichneter Weise vor Umgebungseinflüssen geschützt sind. Eine Korrosionsbeanspruchung der Fäden ist dadurch weitesgehend ausgeschlossen. Auch Stahldrähte lassen sich problemlos bei der Herstellung fadenarmierter, stranggepreßter Gummikörper verwenden, welche als Seile im Naßbereich zur Anwendung gelangen.

Der Gegenstand der Erfindung wird nachfolgend anhand der in der Anlage beigefügten Zeichnung weiter verdeutlicht. Es zeigen:

### Figur 1

Eine erste Vorrichtung zur Durchführung des erfindungsgemäßen Verfahrens.

### Figur 2

Eine zweite Vorrichtung zur modifizierten Anwendung des erfindungsgemäßen Verfahrens.

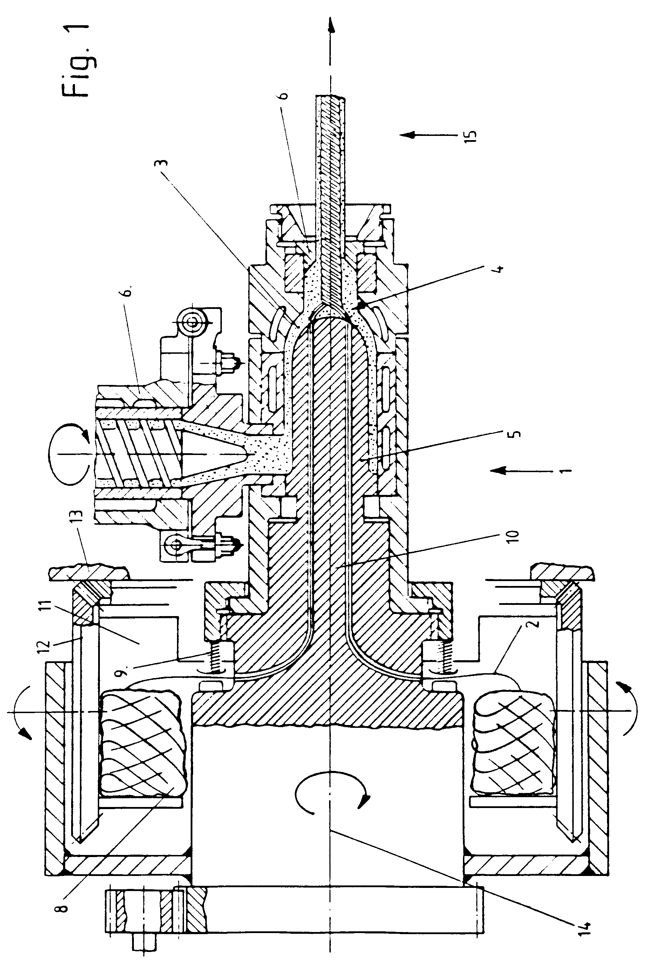

Der in Figur 1 gezeigte Scherkopf dient zur Herstellung eines fadenarmierten, stranggepreßten Gummikörpers nach dem vorstehend beschriebenen Verfahren. Er besteht aus dem Gehäuse 1, das vor der Austrittsöffnung eines Extruders 6 befestigt ist. In dem Gehäuse 1 ist eine Formdüse 6 angeordnet sowie ein der Formdüse 6 koaxial zugeordneter und um seine Achse drehbarer Scherdorn 5, der mit einem eigenem Antrieb versehen ist.

Der Scherdorn 5 ist im linksseitigen Teil der Darstellung mit Spulen 8 versehen, die seiner Drehbewegung folgen und aus denen kontinuierlich die Fäden 2 abgezogen und an einer Reibeinrichtung 9 vorbei in die Fadenführung 10 des Scherdornes 5 einführbar sind. Die die Spulen 8 enthaltenden Behälter 11 sind im Bereich ihres radial nach außen weitenden Durchmessers an einem Kegelrad 12 befestigt, welches mit dem ruhenden Zahnkranz 13 in Eingriff steht. Die Spulen 8 bewegen sich daher während der Rotationsbewegung des Scherdornes 5 nicht nur um dessen Achse 14 sondern zusätzlich in Richtung der eingetragenen Pfeile um die Achse des Kegelrades 12. Hierdurch wird eine Verdrillung der Fäden 2 um ihre eigene Achse bewirkt, welche der Umdrehungsrichtung des Scherdornes 5 entgegengesetzt ist. Diese ist ebenfalls durch einen eingetragenen Pfeil kenntlich gemacht.

Im Bereich des Fadeneinlaufes in den Scherdorn sind die Fäden 2 der Einwirkung der Reibeinrichtung 9 ausgesetzt. In ihnen ist dadurch während der Einbettung in die den Gummikörper bildende Gummimischung eine Zugspannung wirksam.

Die Fadenführung besteht aus einer Anzahl von Bohrungen, die in Umfangsrichtung verteilt sind und deren Mündungen 4 die Stirnfläche des Scherdornes durchbrechen. Die aus den Mündungen 4 austretenden Fäden 2 folgen dadurch der Drehbewegung des Scherdorns 5, was eine Verdrillung um die Achse 14 in der bei 15 gezeigten Weise erfolgt. Hierbei ist es von entscheidender Bedeutung, daß die Geschwindigkeit der Vorwärtsbewegung der Gummimischung 3 so mit der Drehgeschwindigkeit des Scherdornes 5 abgestemmt wird, daß die Gummimischung während der Einbettung der Fäden und insbesondere zu dem Zeitpunkt, zu welchem die Fäden die Mündungen 4 verlassen, zumindest angenähert ihre geringstmögliche Fließviskosität erreicht. Die Vorwärtsbewegung der Gummimischung wird hierbei maßgeblich durch die Fördergeschwindigkeit des Extruders 6 bestimmt. Sie läßt sich unabhängig von der Drehgeschwindigkeit des Scherdorns 5 verändern und auf einen Wert einstellen, bei dem die Einhaltung der angesprochenen Randbedingung gewährleistet ist. Diese läßt sich anhand der Qualität der Einbindung der verwendeten Fäden in den gebrauchsfertigen Gummikörper anhand einer Probe desselben problemlos kontrollieren und im erforderlichen Maße korrigieren.

Vom Grundsätzlichen her ist es möglich, die Geschwindigkeit der Verfahrensdurchführung so zu wählen, daß der die Formdüse 6 verlassende, fadenarmierte Gummikörper in einer fertig vulkanisierten Form vorliegt und seiner bestimmungsgemäßen Verwendung unmittelbar zugeführt werden kann. Unter wirtschaftlichen Gesichtspunkten wird dem gegenüber einer Verfahrensdurchführung der Vorzug gegeben, bei der die Fertigvulkanisierung der Gummimischung 3 innerhalb des Scherkopfes 1 gerade so groß bemessen ist, daß die Vorvulkanisation der Gummimischung abgeschlossen und hierdurch eine für die Lagerung und den Transport ausreichende Eigenfestigkeit des aus der Formdüse 6 austretenden Gummikörpers gewährleistet ist. Dieser kann anschließend in eine Temperkammer überführt und solange der Einwirkung höherer Temperaturen ausgesetzt werden, daß der Vulkanisationsvorgang zum Abschluß gelangt. Die mechanischen Eigenschaften eines solcher Art erzeugten Gummikörpers unterscheiden sich nicht wesentlich von denjenigen, eines auf die vorstehend beschriebe, in dem Scherkopf fertigvulkanisierten Gummikörpers.

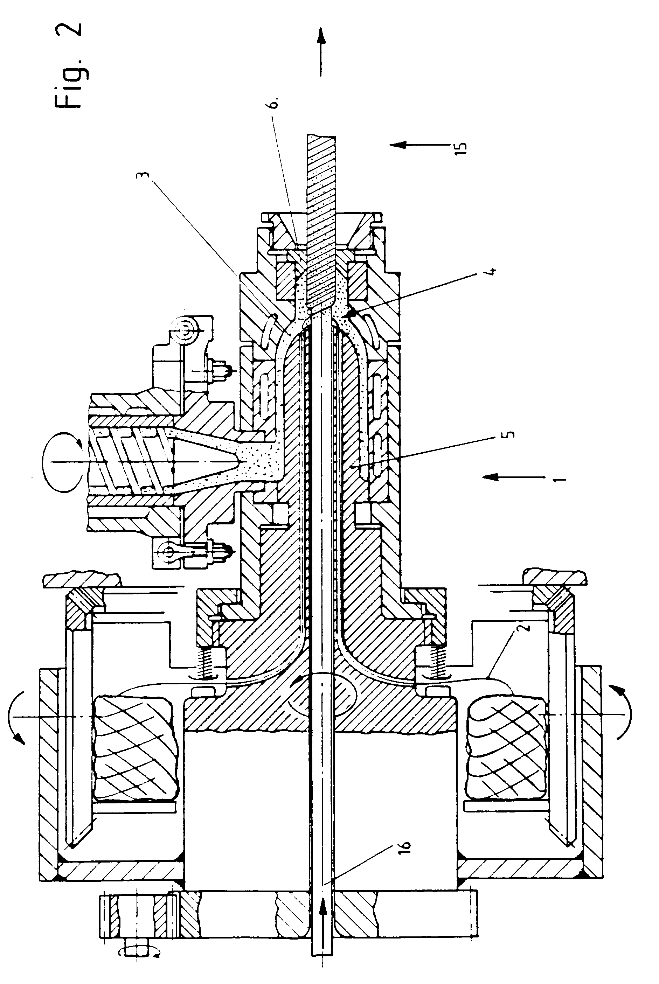

Die in Figur 2 gezeigte Vorrichtung dient der modifizierten Anwendung des erfindungsgemäßen Verfahrens. Abweichend von dem in Figur 1 gezeigten Scherdorn gelangt eine Ausführung zur Anwendung, welche von einer Hilfsöffnung konzentrisch ganz durchdrungen ist. Sie dient der kontinuierlichen Zuführung des Vorformlings 16, welcher entsprechend der vorstehend beschriebenen Verfahrensweise unter Verwendung der in Figur 1 gezeigten Vorrichtung erzeugt sein kann. Er hat, bezogen auf die Drehrichtung und -Geschwindigkeit des Scherdorns 5 eine abweichende Drehrichtung und/oder -Geschwindigkeit und bevorzugt die Drehgeschwindigkeit 0. Die Mündung der Hilfsöffnung durchdringt die Stirnfläche des Scherdorns 5 radial innerhalb der Mündungen 4 der Fadenführungen. Die während der bestimmungsgemäßen Verwendung der Vorrichtung aus den Mündungen 4 austretenden Fäden 2 werden dadurch kontinuierlich mit der Gummimischung ummantelt und schraubenförmig auf den Außenumfang des Vorformlings 16 aufgewickelt. Hierbei kann die in Figur 2 gezeigte, im Vergleich zu Figur 1 entgegengesetzte Drehrichtung des Scherdorns 5 zur Anwendung gelangen, so daß sich eine Windungsrichtung der Verstärkungsfäden 2 ergibt, die derjenigen der zuvor erzeugten Fadenlage entgegengesetzt ist. Für die Formbeständigkeit des nach der Fertigvulkanisierung erhaltenen Gummikörpers ist eine derartige, sich überkreuzende Aufeinanderfolge der einzelnen Fadenlagen von einer hervorzuhebenden Bedeutung. Die Fertigvulkanisierung erfolgt zweckmäßig im Sinne der vorstehenden Ausführungen getrennt von der in Figur 2 gezeigten Vorrichtung in einer separaten Temperkammer.

Es versteht sich von selbst, daß die in Figur 2 gezeigte Beschichtung eines Vorformlings beliebig häufig wiederholt werden kann. Es bedarf hierzu lediglich der Verwendung von Scherdornen 5 und Formdüsen 6, welche hinsichtlich der zur Verfügung stehenden Durchtrittsöffnungen entsprechend aufgeweitet sind. Auch wird man bei größeren Durchmessern die Anzahl der auf dem Umfang der Stirnfläche des Scherdorns 5 verteilten Mündungen 4 entsprechend vergrößern, um die gewünschte Fadendichte innerhalb der Armierung zu erhalten. Eine Nichtbelegung einzelner Mündungen mit Fäden hat keine nachteiligen Auswirkungen auf die sich im Bereich der Nachbarmündungen ergebende Einbindung der dort austretenden Fäden.

## Patentansprüche

1. Verfahren zur Herstellung eines Seiles, bei dem Fäden (2) aus in Umfangsrichtung verteilten, einen radialen Abstand von der Rotationsachse (14) aufweisenden Mündungen (4) einer in einer Drehbewegung befindlichen Verdrilleinrichtung kontinuierlich fortschreitend ausgestoßen, miteinander verdrillt und in einen polymeren Werkstoff eingebettet werden, dadurch gekennzeichnet, daß als Verdrilleinrichtung der im Bereich seiner Stirnfläche von Mündungen (4) durchdrungene Scherdorn (5) eines Scherkopfes (1) und als polymerer Werkstoff eine vulkanisierbare Gummimischung (3) verwendet wird, daß die Fäden (2) vor ihrer gegenseitigen Verdrillung in die Gummimischung eingebettet werden und daß die Geschwindigkeit der Vorwärtsbewegung der Gummimischung (3) so mit der Drehgeschwindigkeit des Scherdorns (5) abgestimmt wird, daß die Gummimischung (3) während der Einbettung der Fäden (2) zumindest annähernd ihre geringst mögliche Viskosität erreicht.

2. Verfahren nach Anspruch 1, dadurch gekennzeichnet, daß die Verweilzeit der Gummimischung (3) in dem Scherkopf (1) so bemessen wird, daß sich die Gummimischung beim Austreten aus der Formdüse (6) in einem fortgeschrittenen Vulkanisationsstadium befindet.

3. Verfahren nach Anspruch 1 bis 2, dadurch gekennzeichnet, daß die Fäden (2) vor der Einführung in den Scherdorn (5) entgegen der Drehrichtung des Scherdornes (5) in sich selbst verdrillt werden.

4. Verfahren nach Anspruch 1 bis 3, dadurch gekennzeichnet, daß die Fäden (2) während der Einführung in den Scherdorn (5) gebremst werden.

## Claims

1. A process for producing a rope, in which filaments (2) are discharged in a continuously advancing manner from openings (4) in a twisting device which is in rotary motion, which openings are distributed in a circumferential direction and have a radial clearance from the axis of rotation (14), are twisted together and are embedded in a polymeric material, characterised in that the twisting device used is the shearing mandrel (5) of a shearing head (1) penetrated by openings (4) in the region of its front face and the polymeric material used is a vulcanisable rubber composition (3), in that the filaments (2) are embedded in the rubber compound before their mutual twisting, and in that the velocity of the forward movement of the rubber composition (3) is determined by the rotational velocity of the shearing mandrel (5) in such a manner that the rubber composition (3) reaches at least approximately its lowest possible viscosity during the embedding of the filaments (2).

2. A process according to claim 1, characterised in that the residence time of the rubber composition (3) in the shearing head (1) is calculated such that the rubber composition is in an advanced stage of vulcanisation upon emerging from the extrusion die (6).

3. A process according to either of claims 1 and 2, characterised in that the filaments (2) are twisted in themselves counter to the direction of rotation of the shearing mandrel (5) before the introduction into the shearing mandrel (5).

4. A process according to any of claims 1 to 3, characterised in that the filaments (2) are retarded during the introduction into the shearing mandrel (5).

## Revendications

1. Procédé de fabrication d'un câble, où des fils (2) sont sortis progressivement et de façon continue d'embouchures (4), réparties dans une direction circonférentielle et espacées radialement de l'axe de rotation (14), d'un dispositif de torsadage entraîné dans un mouvement de rotation, sont torsadés mutuellement et sont noyés dans une matière polymère, caractérisé en ce que, comme dispositif de torsadage, on utilise le mandrin d'enroulement (5), traversé par des embouchures (4) dans une zone de sa surface frontale, d'une tête d'enroulement (1) et, comme matière polymère, un mélange de caoutchouc vulcanisable (3), en ce que les fils (2), avant leur torsadage mutuel, sont noyés dans le mélange de caoutchouc et en ce que la vitesse du mouvement d'avance du mélange de caoutchouc (3) est adaptée à la vitesse de rotation du mandrin d'enroulement (5) de telle sorte que le mélange de caoutchouc (3) atteigne, pendant l'enrobage des fils (2), au moins approximativement sa viscosité la plus petite possible.

2. Procédé selon la revendication 1, caractérisé en ce que le temps de séjour du mélange de caoutchouc (3) dans la tête d'enroulement (1) est réglé de telle sorte que ce mélange de caoutchouc se trouve dans un stade de vulcanisation évolué à sa sortie de la buse d'extrusion (6).

3. Procédé selon une des revendications 1 et 2, caractérisé en ce que les fils (2), avant l'introduction dans le mandrin d'enroulement (5), sont eux-mêmes torsadés en opposition au sens de rotation du mandrin d'enroulement (5).

4. Procédé selon une des revendications 1 à 3, caractérisé en ce que les fils (2) sont freinés pendant l'introduction dans le mandrin d'enroulement (5).
